# EUROPEAN PATENT SPECIFICATION

(11) **EP 2 976 958 B1**
(45) Date of publication and mention of the grant of the patent: **22.01.2020**
(21) Application number: 15175833.1
(22) Date of filing: 08.07.2015
(51) Int. Cl.: A43B 5/00, A43B 5/06, A43B 9/16, A43B 23/02, B29D 35/06, A43B 13/28, A43B 17/00, A43B 13/04

(54) **MULTIFUNCTIONAL OUTDOOR SHOE, IN PARTICULAR MOUNTAIN SHOE, MOUNTAIN RUNNING SHOE, TRAIL RUNNING SHOE OR CLIMBING SHOE, AS WELL AS METHOD FOR ITS MANUFACTURE**
MULTIFUNKTIONALER OUTDOOR-SCHUH, INSBESONDERE BERGSCHUH, BERGLAUFSCHUH, TRAILRUNNING-SCHUH ODER KLETTERSCHUH SOWIE VERFAHREN ZU SEINER HERSTELLUNG
CHAUSSURE EXTÉRIEURE MULTIFONCTION, EN PARTICULIER CHAUSSURE DE RANDONNÉE, DE MONTAGNE, DE COURSE, DE CROSS OU D'ESCALADE, AINSI QUE PROCÉDÉ POUR LEUR FABRICATION

(30) Priority: 09.07.2014 DE 102014213303
(43) Date of publication of application: 27.01.2016
(73) Proprietor: adidas AG, 91074 Herzogenaurach (DE)
(72) Inventor: Leimer, Robert, Portland, OR 97217 (US); Zwinger, Christian, 91074 Herzogenaurach (DE); Zwer, Andrej Nicolai, 91074 Herzogenaurach (DE); Kormann, Marco, 91074 Herzogenaurach (DE); Efimov, Konstantin, 30419 Hannover (DE)
(74) Representative: Wegner, Hans

(56) References cited:
- WO-A1-2009/146368
- FR-A- 1 070 243
- FR-A- 1 109 855
- FR-A- 1 186 240
- FR-A1- 2 766 067
- GB-A- 1 314 728
- US-A- 2 241 599

## Description

### 1. Technical field

The present invention relates to a shoe, in particular a multifunctional outdoor shoe like a mountain shoe, mountain running shoe, a trail running shoe, a climbing shoe or an approach shoe, as well as a method for the manufacture of such a shoe.

### 2. Prior art

By the use of soles, shoes are provided with a plethora of different properties, which may be developed to different degrees, depending on the specific type of shoe.

In order to prevent, for example, injuries or overstraining of the musculoskeletal system of the wearer, a sole can provide stability to the foot of the wearer and also lead to a cushioning of forces which act on the wearer of the shoe and, in particular, his foot during ground contact of the foot.

The sole and, in particular, the outsole of a shoe can also allow an improved traction of the shoe on the ground, in order to prevent, for example, a slipping of the wearer. This is of extraordinary importance, in particular, for mountain running or -hiking, when doing via ferratas or when climbing, because a slipping could potentially lead to a fall of the wearer or severe injuries otherwise inflicted.

Furthermore, a shoe sole can protect the shoe from excessive wear by its increased abrasion resistance. This is important for mountain running or -hiking, doing via ferratas or climbing, too, as during these activities and caused by the high pressure with which the sole is pressed onto the ground and the often very rough and stony ground conditions, high abrasion forces act on the sole.

In addition, shoe soles usually serve protective purposes, for example, in order to protect the foot of the wearer from injuries which may be caused by sharp or pointed objects on which the wearer may tread, for example pointed stones or sharp rock ridges.

In order to provide the desired functionality, the use of vulcanized rubber as material for outsoles is known from the prior art. Vulcanized rubber distinguishes itself by good elasticity- and traction properties and is at the same time very abrasion resistant.

For example, US 1,947,173 A discloses a shoe, in particular a bathing shoe, wherein a heel filler and an arch stiffener connected therewith are enclosed by a rubber composition in a mold under the influence of pressure and heat.

US 3,098,308 A discloses a shoe with an outsole of moldable non-porous rubber which constitutes the wear surface of the shoe and is directly secured to an upper. In a vulcanizing process, the rubber enters into a direct connection with a welt of the upper.

US 4,294,022 A discloses boots for divers comprising a sock made of elastomeric material, preferably covered by nylon fabric on one or two sides. The boot further comprises an outsole together with a back stay, a toe-cap and a foxing, made of non-cellular rubber and directly vulcanized as a unit on the sock. To this end, the sock is covered with a neoprene base cement and subsequently with a natural rubber base cement, prior to vulcanization.

US 6,805,825 B1 relates to the molding of a sole onto the formed upper of an item of footwear such as a shoe or boot.

DE 199 03 688 A1 relates to a method and facility for the manufacture of footwear.

US 8,205,357 B2 relates to a shoe having a midsole portion that can be quickly and easily exchanged. FR 1 186 240 A relates to a method of manufacturing footwear and a shoe thus obtained. FR 2 766 067 A1 relates to a shoe for children and a method for its manufacture.

GB 1 314 728 A relates to footwear having ground engaging projections such as spikes or studs, and to such articles of footwear as golf shoes, running shoes or football boots, of which at least the sole is moulded, for example entirely by an injection moulding process from a synthetic plastics material such as polyvinylchloride, or by a conventional rubber vulcanising process.

It is, however, a disadvantage of the shoes known from the prior art that they may be less comfortable when worn for a longer period of time, in particular if the shoe upper is itself comprised from rubber and can hence lead, for example, to an excessive sweating of the foot, that the connection of the shoe upper to the sole only exists in individual regions along the rim such that the stability of the shoe- and sole construction needed for, for example, climbing may not be given, as well as an increased manufacturing effort that may necessitate the use of additional binders.

It is therefore, among other things, a problem of the present invention to provide shoes, in particular multifunctional outdoor shoes like mountain shoes, mountain running shoes, trail running shoes, climbing shoes, shoes for via ferratas or approach shoes, which are comfortable to wear also over longer periods of time and which comprise the stability and durability of the connection of the sole to the shoe upper which is necessary for mountain running or mountain hiking, climbing or doing via ferratas. The shoe should be easily manufactured without the use of additional binders, too.

The soles of the shoes should preferably comprise the traction and abrasion resistance which is necessary for mountain running, mountain hiking or climbing and the shoes should at the same time protect the foot of the wearer from injuries. A further problem of the present invention is given by providing a method for the manufacture of such shoes, which should be as simple as possible and which allows refraining from the use of additional bonding agents or binders and environmentally hazardous substances as far as possible.

### 3. Summary of the invention

The invention is defined in the independent claims 1 and 11. Preferred embodiments are defined in the dependent claims.

According to an aspect of the invention, this problem is at least partially solved by a shoe, in particular by a multifunctional outdoor shoe, for example a mountain shoe, a mountain running shoe, a climbing shoe, a shoe for doing via ferratas or an approach shoe, which comprises a shoe upper and a textile two-dimensional region connected to the shoe upper which extends beneath the foot of the wearer of the shoe. The shoe further comprises an outsole unit with a rubber material. Herein, the two-dimensional region is connected to the rubber material of the outsole unit without a bonding agent.

The shoe upper may be provided in such a manner that the desired wearing comfort is achieved. The shoe upper can, in particular, be breathable but at the same time impermeable to water and dirt and it can nestle against the foot of a wearer without creating uncomfortable pressure points. To this end, the shoe upper may, for example, comprise a textile fabric from natural and / or synthetic materials, for example polyester, PET-polyester or polyamide. The material of the shoe upper is preferably chosen heat- and color stable in such a manner, that it does not get discolored or loses its structure during a manufacturing process (like the one more closely described further below, for example).

Further, because the outsole unit is connected to the textile two-dimensional region which extends beneath the foot, a particularly resistant and durable connection of the outsole unit and the shoe upper connected to the textile two-dimensional region is created, compared to a connection only existing at the rim of the sole, which can also withstand the high loads occurring during hiking or climbing.

The textile design of the two-dimensional region further allows that the rubber material of the outsole unit forms a matrix material with the two-dimensional region during the manufacture, wherein a mechanical connection can exist - for example by the rubber material flowing into or around openings, loops, honeycombs or other structures of the textile two-dimensional region - and on the other hand a chemical connection can exist, wherein the chemical connection can be achieved through the choice of the rubber material and / or the material of the textile two-dimensional region without additional bonding agents or binders. Preferably, a mechanical as well as a chemical connection is created, such that the connection is particularly durable and resistant.

The rubber material may be a vulcanized or partially vulcanized rubber material, for example on the basis of natural rubber (caoutchouc). It is, however, pointed out that within this document all materials are implied by the term rubber material that, after conclusion of the manufacturing process, comprise properties which are similar or equal to those of vulcanized rubber, in particular similar properties with respect to abrasion resistance, elasticity and traction on different grounds. The rubber material may hence also be a thermo-formable plastic or something similar.

The use of such a rubber material in the outsole unit further allows providing the outsole unit with the abrasion resistance, traction and elasticity that are desirable, in particular, for multifunctional outdoor shoes like mountain shoes, mountain running shoes, climbing shoes, shoes for doing via ferratas or an approach shoe. Herein, the outsole unit may exclusively be comprised of the rubber material or it may comprise additional materials of functional elements. The outsole unit can, for example, comprise additional reinforcing elements or a recess for an electronic chip (GPS), for example for determining the position of the wearer in cases of emergency, and so forth. Possible is also an RFID or NFC chip, which comprises information about the shoe (for example manufacturer, size, model, color, intended field of use, promotional videos, and so forth).

It is explicitly mentioned in this context that the outsole unit may also comprise different rubber materials in different partial regions. For example, a particularly abrasion resistant rubber material at the rim of the sole may be combined with a rubber material providing particular high traction in regions in which the sole will primarily contact the ground, in order to avoid fast wear at the rim of the sole and in order to increase the traction of the sole at the rim, and at the same time prevent a slipping or sliding of the wearer. Or a particularly abrasion resistance rubber material in the forefoot region may be combined with a rubber material in the heel region providing a particular high traction, in order to minimize the wear during push-off over the forefoot during climbing and to prevent a slipping when treading on the heel. These are merely two possible examples for the combination of different rubber materials, and further possibilities are conceivable for the skilled person.

In the following, further embodiments of inventive shoes are described. Explicit reference is, however, made to the fact that these possibilities are to be understood as optional and need not be present in all embodiments of inventive shoes.

The two-dimensional region may, in particular, be connected to the outsole unit by vulcanizing of the rubber material.

As base material, in particular, unvulcanized rubber may be considered, wherein, as already mentioned, in different partial regions of the outsole unit different materials or mixtures of materials may be used, in order to influence the properties of the outsole unit locally. In addition, partially or entirely vulcanized rubber in a mix with unvulcanized rubber may be used in partial regions of the outsole unit.

It is conceivable that the two-dimensional region occupies more than 30%, preferably more than 50% and particularly preferably more than 80% of the total area beneath the foot of the wearer.

The higher the percentage of the total area beneath the wearer is that is occupied by the two-dimensional region, the higher the resistance and durability of the connection between the outsole unit and the two-dimensional region can be and therefore also the connection to the shoe upper. In particular, compared to a connection existing only at the rim of the sole, this can increase the lifetime and stability of the shoe and hence its suitability for, for example, doing via ferratas or climbing.

The two-dimensional region may, in particular, be provided as a Strobel sole.

Strobel soles are often used for the manufacture of sports shoes and they are hence easily obtained and processed. Furthermore, they allow further influencing the flexibility- and stability properties of the shoe and, in particular, the shoe upper in an advantageous manner.

It is furthermore also conceivable that the two-dimensional region is board lasted, that together with the shoe upper it comprises a moccasin-construction, that it is glued to the shoe upper, or that it comprises a combination of these possible ways of construction.

It is possible that the entire two-dimensional region is connected to the rubber material of the outsole unit.

By such a connection over the entire two-dimensional region, the resistance and durability of the connection between the rubber material of the outsole unit and the textile two-dimensional region and hence the shoe upper can be further increased. In principle, it is, however, also possible that the rubber material of the outsole unit is only connected to the textile two-dimensional region in partial regions thereof. This may, for example, be desirable if certain regions of the foot or the sole of the foot shall be provided with a larger degree of freedom of movement. Moreover, such a partial connection may also be used for providing, for example, ventilation openings in the unconnected regions.

Furthermore, also the shoe upper may connected to the rubber material of the outsole unit without a bonding agent.

This allows further influencing the stability, durability, traction, elasticity properties, suitability for climbing, impermeability to water, and so forth of the shoe as desired. Also here, a matrix material may form during the manufacture, wherein on the one hand a mechanical connection may exist - for example by the rubber material flowing into or around openings, loops, honeycombs or different structures of the shoe upper, in particular if the shoe upper also comprises a textile fabric - and on the other hand a chemical connection may exist, wherein the chemical connection may be achieved without additional bonding agents or binders due to the choice of the rubber material and / or of the material of the shoe upper. Preferably, also here a mechanical as well as a chemical connection exists.

The shoe upper can be connected to the outsole unit by vulcanizing of the rubber material.

In this context, and as already explained just now, a matrix material can form of the vulcanized rubber material of the outsole unit and the material of the shoe upper, in particular a textile material of the shoe upper. In this way, layers of the rubber material with different layer thicknesses can be connected to the shoe upper in a durable and abrasion resistant manner. It is, for example, possible that thin layers with layer thicknesses of < 2 mm or < 1.5 mm, but also very thin layers with layer thicknesses of < 1 mm are connected to the shoe upper in a durable and abrasion resistant manner. Just as well, however, thicker layers with layer thicknesses > 2 mm or even > 3 mm or > 5 mm can be connected with the shoe upper in a durable and abrasion resistant manner, too. In particular, with respect to the possibility of such thin layers, it is mentioned that in conventional gluing methods for the manufacture of outsoles, rubber in such thin layers could easily tear when it is pulled into shape and glued.

It is further pointed out that the layer thickness of the rubber material can also vary across the outsole unit. For example, in the region of the toes and / or the heel, a rubber layer with a larger layer thickness can be vulcanized onto the two-dimensional region and the shoe upper, in order to create a stable toe- / heel cap in this manner (see below). Simultaneously, the shoe upper can be protected by a thin rubber layer without a significant increase in weight from the ingress of dirt and water by the rubber material of the outsole unit, for example in the region above the forefoot / instep or at the rims of the foot.

It is possible that the two-dimensional region and /or the shoe upper are mechanically connected to the outsole unit. This possibility has already been pointed out several times. A mechanical connection can, for example, be created by the rubber material of the outsole unit flowing into or around openings, loops, honeycombs or different structures of the two-dimensional region and / or the shoe upper, such that a matrix material forms. Herein, thin (< 2 mm or < 1.5 mm), very thin (< 1 mm) as well as thicker layers (for example > 2 mm, > 3 mm or > 5 mm) of the rubber material can be connected to the two-dimensional region and / or the shoe upper.

The rubber material can, in particular, have at least partially permeated the two-dimensional region and / or the shoe upper and in this manner lead to a mechanical connection. Such a mechanical connection can be particularly close and hence resistant and durable.

It is further also possible that the two-dimensional region and / or the shoe upper are chemically connected to the outsole unit.

The two-dimensional region and / or the shoe upper can, in particular, be connected to the outsole unit both mechanically as well as chemically.

A chemical connection of the outsole unit to the two-dimensional region and / or the shoe upper can, for example during the vulcanizing, be achieved without bonding agents or binders, if the rubber material and the material of the two-dimensional region and / or the shoe upper are chosen suitable to this end. As possible material for the shoe upper, polyester, PET-polyester or polyamide have already been mentioned. Further possible materials and components of the rubber material, which may, in particular, allow such a chemical connection without additional bonding agents or binders, will be described further below.

The outsole unit can be integrally provided as a single piece and in addition to a tread surface comprise one or more of the following elements: a toe cap, a lateral side wing, a medial side wing, a heel cap.

Since the rubber material of the outsole unit preferably comprises a high elasticity and abrasion resistance, these elements can particularly well adapt to the foot of the wearer and protect it from water, dirt and injuries. In addition, they can increase the durability of the shoe in these regions. These advantageous effects are further promoted by the integral design of the outsole unit. These elements can also serve the purpose to selectively adjust and increase the stability of the shoe and its sole in individual regions. For example, by the use of such side wings a sliding of the foot in a sideward direction can be prevented or hampered.

The heel cap can, in particular, be integrally provided as a single piece together with the outsole unit in such a manner that the heel of the wearer leads to a stretching of the material of the heel cap such that the heel cap nestles against the heel of the wearer.

The heel cap can, for example, be designed and dimensioned in such a manner that it is somewhat narrower than the heel of the wearer and / or comprises a certain degree of "pre-tension". When donning the shoe, the material of the heel cap is then initially stretched, such that a restoring force is created in the material. This restoring force leads to the heel cap nestling against the heel of the wearer and abutting it as precisely fitting as possible, which can result in a good fit of the shoe and a good stabilization of the foot. In addition, this can help avoiding blisters at the heel. In particular, the use of a rubber material in the outsole unit and the heel cap is advantageous in this context, as rubber can be very elastic and can therefore promote this nestling effect.

In addition, the heel cap can itself be provided stable enough that no additional reinforcement material is required in the region of the heel cap. If desired, it is, however, possible to further increase the stability in the region of the heel cap by inserting an insole (see below).

The outsole unit may further be integrally provided as a single piece and comprise one or more first profile elements in the forefoot region that each comprise an indentation in the direction of the heel and / or comprise one or more second profile elements in the heel region that each comprise an indentation in the direction of the toes.

The first and second profile elements may, for example, serve the purpose of improving the traction of the shoe, for example when hiking on grit, scree or gravel. Herein, the individual first and / or second profile elements may, for example, comprise a distance to each other which is chosen large enough that no individual objects like stones or sticks or clay (in order to prevent a "clay clumping") get stuck between the profile elements and thus lead to a slipping of the foot when treading or pushing off. On the other side, the surface of the first and / or second profile elements can be chosen small enough that they penetrate into the ground far enough or engage with the ground also on harder soil, damp clay, grass and so forth that the desired traction is achieved.

The indentations in the direction of the heel of the first profile elements, which are arranged in the forefoot region, can engage with the ground during push-off of the foot in the forward direction and hence prevent or hamper a slipping of the foot in the backward direction. The indentations in the direction of the toes of the second profile elements, which are arranged in the heel region, can engage with the ground when treading with the heel and hence prevent or hamper a slipping of the foot in the forward direction. To this end, the indentations can, for example, comprise a V-shape, with the tips of the V serving the purpose of engaging with the ground.

The outsole unit can furthermore be integrally provided as a single piece and comprise one or more third profile elements, for example in the medial toe region, wherein the third profile elements are arranged at a rim of the outsole unit and each comprise a clearly defined edge at the rim.

The respective edge can, in particular, facilitate treading on small landings, ledges or steps in the rocks.

During climbing, when doing via ferratas or during the approach, it is often necessary to tread on small landings, ledges or protrusions in the rocks, for example with the region beneath the big toe, wherein a large percentage of body weight is supported on this small region of the outsole when lifting the body up from the leg muscles. In this situation, a slipping can lead to a fall or other very serious injuries. In order to avoid this, third profile elements can be arranged, for example, in the medial toe region and, in particular, at the rim of the sole beneath the region of the big toe, which comprise a clearly defined edge at the rim of the outsole unit and which facilitate treading on such small structures and prevent or hamper a slipping. The angle at this clearly defined edge can, for example, be 70° or 80° or 90° or a different angle in the range of, for example, 70° - 90°. The angle may also change along the profile element in order to be adapted to the characteristic movement patterns for climbing, for example twisting in the foot or the hips, in order to facilitate such movements. In addition, a rubber material is preferably used for the third profile elements which comprises a high stability and stiffness and which doesn't yield under the above-mentioned high loads during ascent.

It is possible that the shoe further comprises a releasable insole.

The insole may contribute to providing the shoe with the desired stability and stiffness as well as the desired cushioning properties. Hence, during the manufacture and construction of the shoe upper and the outsole unit, the primary focus can be on different properties, for example the traction and abrasion resistance. Also, by use of a changeable insole, for example, the stability and cushioning properties of the shoe can be changed during use, for example, during a hike, during mountain running or when doing a via ferrata, without the wearer having to carry a complete second pair of shoes. This can mean a significant safe in weight.

For example when doing a via ferrata, climbing passages are often interspersed with longer walking passages or approach passages. In the climbing passages, for example a harder, lightweight and less cushioned insole may be inserted which provides a high degree of stability to the shoe, allows a strong push-off over the forefoot region and in general allows for a direct feedback from the rock to the foot. On walking passages or the descent, on the other side, a softer and more comfortable insole can be inserted, which protects the musculoskeletal system of the wearer and guards against fatigue or injuries. By use of a shallower insole it is furthermore possible to have the foot sit deeper within the shoe. This can provide a significantly higher degree of stability. This is, for example, conceivable for a mountain- or trail running competition. After the competition, the properties of the shoe can be changed, for example, a thicker insole may be inserted for a recovery period.

The insole can comprise a shell element and a cushioning region, wherein the shell element comprises a larger deformation stiffness than the cushioning region.

Herein, the shell element can provide the shoe with the desired stability. The cushioning region, on the other hand, can serve to dampen and cushion the forces which act on the musculoskeletal system of the wearer during impact on the ground. To this end, the shell element can, for example, surround the cushioning region along the rim of the insole and on the side of the insole facing away from the foot, in order to provide the desired stability, whereas directly beneath the foot the cushioning region is arranged in order to absorb the impact forces.

As a material for the shell element, for example, materials with a hardness of 55 shore C may be considered, for example ethylene-vinyl-acetate (EVA) with a hardness of 55 shore C. However, also different hardnesses (softer or harder) are conceivable, for example hardnesses in the range of 45 shore C (very soft) - 70 shore C (very hard) or values from individual subranges within this range, for example values in the range 45 - 55 shore C, 55 - 60 shore C or 60 - 70 shore C, and so forth. Furthermore, polyurethane, thermoplastic rubber or cork, for example with a hardness in one of the ranges just mentioned, may be considered as material for the shell element.

It is possible that the cushioning region comprises one or more of the following materials: (expanded) ethylene-vinyl-acetate, foamed ethylene-vinyl-acetate, (expanded) thermoplastic polyurethane, foamed polyurethane, (expanded) polypropylene, (expanded) polyamide, (expanded) polyetherblockamide, (expanded) polyoxymethylene, (expanded) polystyrene, (expanded) polyethylene, (expanded) polyoxyethylene, (expanded) ethylene-propylene-diene-monomer. The cushioning region can, in particular, comprise randomly arranged particles that comprise one or more of the previously mentioned expanded materials and that are potentially connected with one another, for example by fusing of the particle surfaces. Cushioning regions or cushioning elements from such randomly arranged particles of an expanded material as well as methods for their manufacture are, for example, described in documents DE 10 2012 206 094 A1 and EP 2 649 896 A2.

These materials, in particular the expanded materials, are particularly well suited to cushion and absorb the impact forces acting during impact. In particular, randomly arranged particles from expanded thermoplastic polyurethane or expanded polyetherblockamide which are fused at their surfaces have the property that the energy absorbed during absorption of the impact forces is to a large degree returned to the foot of the wearer and that hence the endurance of the wearer is facilitated.

Furthermore, materials with a hardness of, for example, 40 shore C are well suited for the cushioning region. However, different hardnesses (softer or harder) are also conceivable, for example hardnesses in the range from 30 shore C (very soft) - 55 shore C (very hard) or values from individual subranges within this range, for example values in the range of 30 - 40 shore C, 40 - 45 shore C or 45 - 55 shore C, and so forth. For example, EVA with a hardness of 40 shore C is well suited as a material for the cushioning region.

The shell element can comprise reinforcement wings in the medial and lateral region of the toe joints.

These reinforcement wings, which preferably correspond to respective side wings of the outsole unit, can serve the purpose of stabilizing the foot of the wearer sufficiently with regard to sideward movements. In case such a stabilization is missing, this can potentially lead to an uncomfortable and unsecured wearing sensation and promote injuries. The reinforcement wings can furthermore prevent or minimize a movement of the insole relative to the inside of the shoe. This can be desirable for the benefit of the stability of the shoe.

The reinforcement wings may be (jointly) provided with different heights, for example in order to achieve a strong or not so strong reinforcement and / or stabilization. It is also possible that the reinforcement wing on the medial side has a different height / thickness / design than the reinforcement wing on the lateral side, in order to limit or to influence / control a sideward movement of the foot selectively, for example in a preferred direction to the lateral side or to the medial side. It is, in particular, possible that the medial reinforcement wing is designed with a greater height than the lateral reinforcement wing, leading to a stronger stabilization of the inside of the foot and having a supporting effect during running. The reinforcement wings can further also be partially elastic, in order to provide the foot of the wearer with a defined freedom of movement.

The insole can further comprise one or more of the following elements: a heel support, a midfoot support, a recess for an electronic component, a reinforcement foil in the forefoot region and / or the midfoot region and / or the heel region. In particular, a reinforcement foil with thermoplastic polyurethane may be considered.

Such additional elements can further serve the purpose of fine-adjustment of the stability- and elasticity properties of the insole and the entire shoe, which may hence be individually adjusted to the respective requirements, for example high stability and direct feedback for climbing, and higher cushioning and a behavior which is good for the joints during walking / hiking.

The reinforcement foil can, in particular, increase the stiffness of the insole in the forefoot region and / or in the midfoot region and / or in the heel region.

Herein, it is possible that different materials or different material thicknesses are used for the reinforcement foil in different regions of the insole, in order to achieve a certain stiffness of the insole in the respective regions. Such a reinforcement foil can further limit or control a widening or sideward expansion of the material of the cushioning region and / or the shell element under a pressure load on the insole. Also, the degree of influence can be adjusted to the respective wishes by a corresponding choice of different materials, material thicknesses, designs and arrangements of the reinforcement foil on the insole.

The insole can comprise dimensions which lead to a stretching of the shoe upper upon insertion of the insole into an inside of the shoe upper.

The stretching of the shoe upper can lead to restoring forces in the shoe upper, which lead to a securing of the insole in the shoe without additional securing devices and prevent or hamper a sliding of the insole. This can, in particular, lead to a force-fit connection between the two elements.

It is conceivable that the rubber material comprises one or more of the following materials: butyl-rubber, butadiene-rubber, natural rubber (caoutchouc), styrene-butadiene-rubber, nitrile-rubber, in particular nitrile rubber comprising one or more of the following materials in parts: ethylene-vinyl-acetate, lignosulfonate, silanes.

Styrene-butadiene-rubber, in particular vulcanized styrene-butadiene-rubber, comprises particular good traction properties and abrasion resistance and is hence well suited for use in the outdoor field, in particular for climbing. Nitrile rubber, in particular nitrile rubber comprising ethylene-vinyl-acetate, lignosulfonate and / or silanes in parts, allows, in particular, the rubber material to enter into a chemical connection with the textile two-dimensional region and potentially the textile fabric of the shoe upper during the vulcanizing without additional bonding agents or binders being necessary for this. It is pointed out that all these materials are not harmful for the human.

A further aspect of the invention is provided by a method for the manufacture of a shoe, in particular a multifunctional outdoor shoe, for example a mountain shoe, a mountain running shoe (a trail running shoe), a climbing shoe or an approach shoe, comprising a positioning of a mounting in a molding arrangement, wherein a shoe upper and a textile two-dimensional region connected to the shoe upper which extends beneath a foot of a wearer of the shoe are arranged on the mounting. The method further comprises a positioning of at least one sole material comprising a rubber material in at least one recess in the molding arrangement and / or on the shoe upper and / or on the two-dimensional region, a closing of the molding arrangement, and a connecting of the rubber material to the two-dimensional region without the use of a bonding agent.

The method hence allows a simple manufacture of an inventive shoe without the use of additional bonding agents or binders, wherein a durable and resistant connection between the rubber material and the two-dimensional region can still be obtained. It is again pointed out that the sole material and, in particular, the rubber material can comprise different material compositions in different regions, which translates to corresponding different properties of the manufactured shoe at the respective positions after conclusion of the method.

It is further mentioned that the mounting can, for example, be a last, in particular a last made of metal like, for example, aluminum, steel or a mixture thereof, which withstands the temperatures (see below) occurring during the method.

The step of connecting the rubber material to the two-dimensional region can comprise a vulcanizing of the rubber material under the influence of pressure and / or under the provision of heat for the creation of an outsole unit.

It is a particular advantage of the method described here that the method allows the manufacture of an integral unit with, for example, an outsole, a toe cap, medial side parts, lateral side parts and a heel cap. By vulcanizing the rubber material onto the two-dimensional region and potentially the shoe upper, it can furthermore be ensured that individual parts do not get detached from the two-dimensional region / shoe upper. This is in particular so as the rubber material can form a matrix material with the two-dimensional region, and potentially with the shoe upper, too, as previously mentioned, which can on the one hand comprise a mechanical connection and on the other hand can comprise a chemical connection. Preferably, both a mechanical as well as a chemical connection exists. This also allows achieving thin (< 2 mm or < 1.5 mm) or very thin (< 1 mm) layer thicknesses of the vulcanized rubber material, which are nonetheless connected to the two-dimensional region or the shoe upper in an abrasion resistant and durable manner, which is very hard or impossible to achieve with a gluing method.

In the method, the vulcanizing can be performed under the following conditions: a temperature in the closed molding arrangement of 150°C - 200°C, preferably of 160°C - 190°C, and particularly preferably of 165°C - 175°C; a closing force of the molding arrangement of 100 kg - 200 kg, preferably of 140 kg - 160 kg, and particularly preferably of 145 kg - 155 kg; and a duration of the vulcanization process of 5 min - 15 min, preferably of 6 min - 10 min, and particularly preferably of 8 min.

As closing force of the molding arrangement, for example the force with which the individual parts of the molding arrangement are pressed onto each other during the vulcanizing may be implied.

These process parameters have turned out advantageous in order to achieve a vulcanization in a manner that the vulcanized rubber material comprises the desired properties, wherein at the same time the shoe upper and the two-dimensional region are not damaged or impaired. Care has, in particular, to be taken that the pressure in the molding arrangement is chosen large enough in order that the rubber material completely fills the molding arrangement during vulcanizing and does not leave the molding arrangement, but at the same time not so high that the molding arrangement damages the shoe upper or the textile two-dimensional region arranged on the mounting. To this end, the boundaries of the molding arrangement should also not comprise any sharp-edged regions.

However, manufacturing parameters in different ranges or intervals are also conceivable, for example temperatures in the closed molding arrangement in the range 150°C - 160°C, 160°C - 170°C, 170°C - 180°C, 180°C - 190°C, 190°C - 200°C or even higher or lower temperatures, closing forces in the range 100 kg - 110 kg, 110 kg - 120 kg, 120 kg - 130 kg, ... , 190 kg - 200 kg or even higher or lower closing forces, as well as a duration of the vulcanization process in the range of, for example, 5 min - 8 min, 8 min - 12 min, 12 min - 15 min or even longer or shorter process durations.

It is conceivable that the molding arrangement comprises a plurality of movable mold parts, which, together with potentially existing unmovable parts of the molding arrangement, form an essentially closed molding space after closing of the molding arrangement, in which the mounting along with the shoe upper and the textile two-dimensional region connected therewith are arranged.

This allows a particularly simple positioning of the mounting in the mold and can facilitate an automatization of the method.

It is also possible that, prior to the closing of the molding arrangement, in or on at least some of the movable parts a two-dimensional piece of the sole material is positioned within a corresponding recess of the movable mold part.

As far as unmoving mold parts do exist, it is also possible that in or on at least some of the unmovable mold parts a respective two-dimensional piece of the sole material is positioned within a corresponding recess of the unmovable mold part.

Finally, it is also possible that such a two-dimensional piece of the sole material is positioned directly on the textile two-dimensional region and / or the shoe upper. This allows, in a simple manner, to position sole materials with different compositions in different regions of the shoe or the sole and hence to selectively influence the properties of the manufactured shoe and, in particular, the outsole unit selectively in individual partial regions.

### 4. Brief description of the figures

Currently preferred embodiments of the present invention are further described in the following detailed description with reference to the following figures:
- **Figs. 1a-j:**: Embodiment of an inventive shoe;
- **Figs. 2a-d:**: Embodiment of an inventive insole for use in combination with, for example, the shoe shown in **Figs. 1a****-j;**
- **Figs. 3a-b:**: Molding arrangement for performing an embodiment of an inventive manufacturing method; and
- **Figs. 4a-d:**: Results of measurements of the coefficients of kinetic and static friction of different rubber materials under different loads.

### 5. Detailed description of currently preferred embodiments

Currently preferred embodiments of the invention are described in the following detailed description with reference to multifunctional outdoor shoes like mountain shoes, mountain running shoes, climbing shoes or approach shoes. It is emphasized, however, that the present invention is not limited to these embodiments. Rather, the present invention can also be advantageously applied to street shoes, running shoes, shoes for fishing, working shoes, and so forth.

It is further pointed out that in the following only individual embodiments of the invention will be more closely described. The skilled person we realize, however, that the elements and design options described in the context of these specific embodiments may also be modified or combined with one another in a different manner within the scope of the invention and that individual elements may also be omitted if they seem dispensable for a specific shoe. In order to avoid redundancies, reference is, in particular, made to the explanations in the preceding section 3. ("Summary of the invention"), which also remain applicable for the following description.

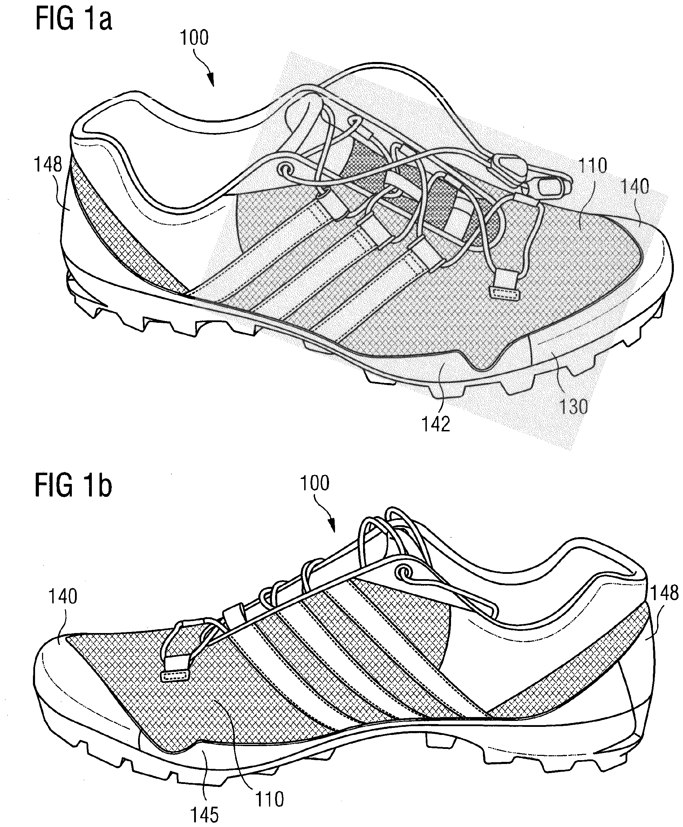

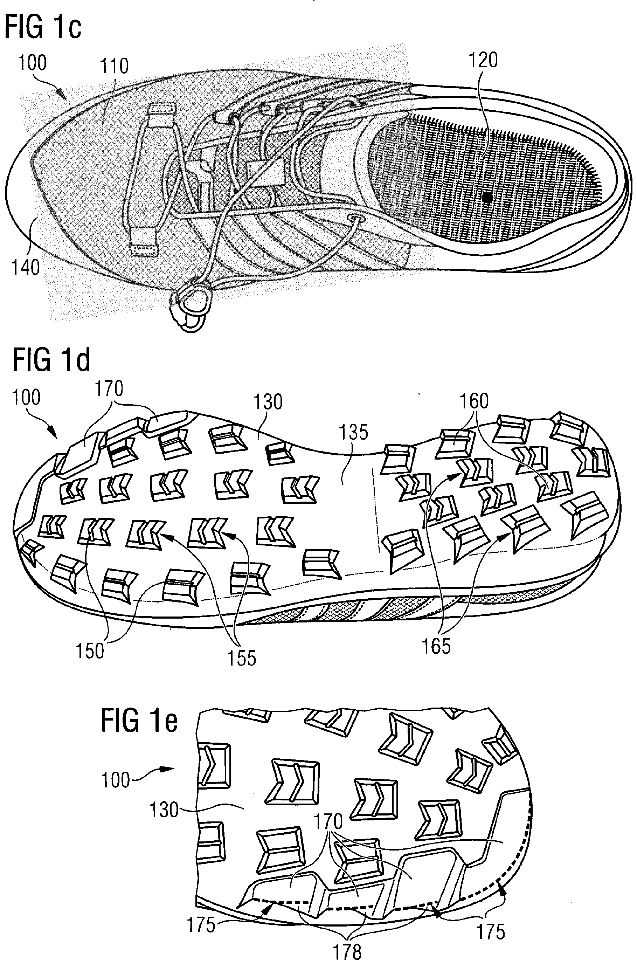

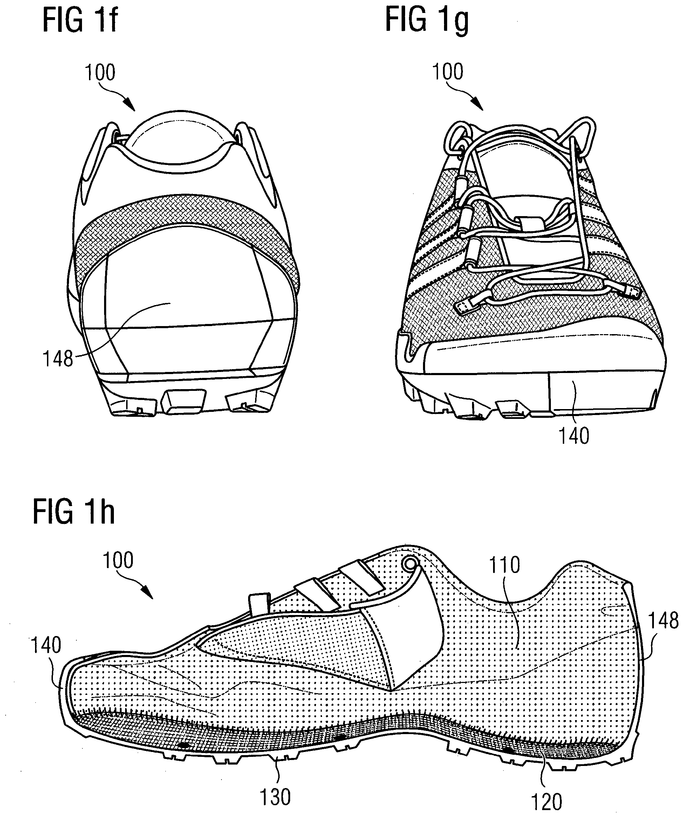

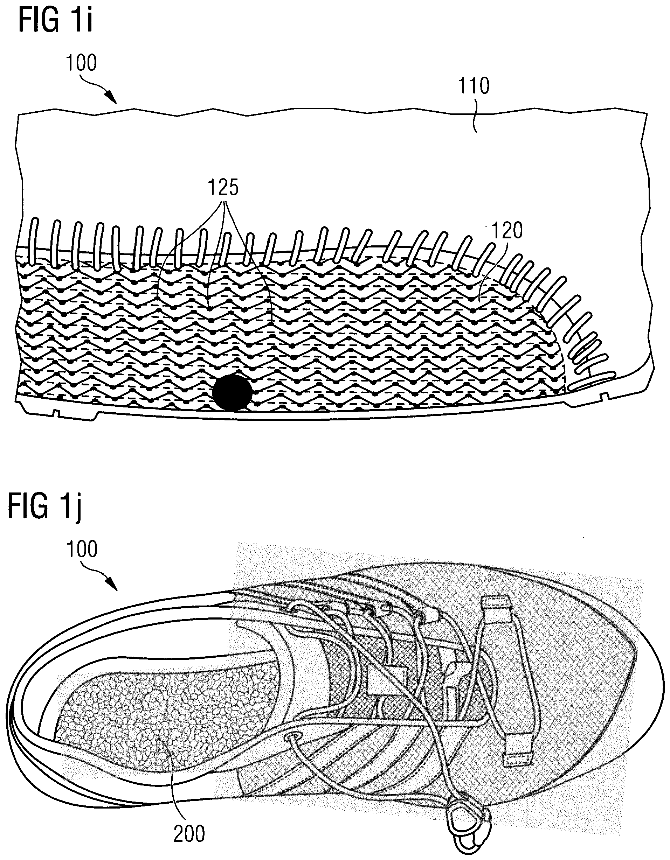

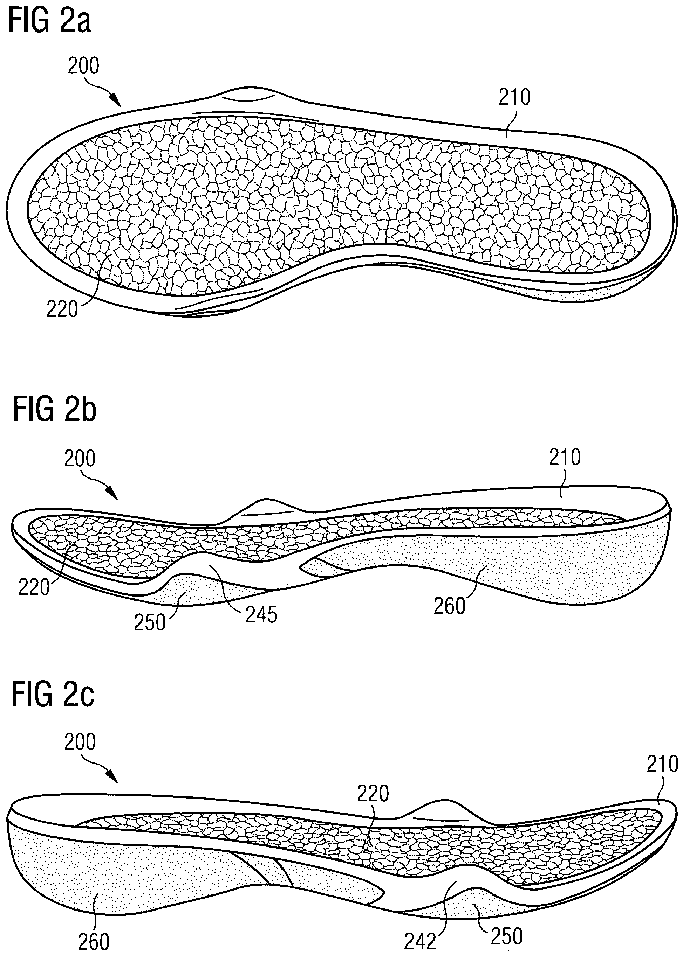

**Figs. 1a****-j** show an embodiment of an inventive shoe **100.** **Fig. 1a** shows a lateral side view and **Fig. 1b** a medial side view of the shoe **100.** **Fig. 1c** shows a top view of the shoe **100,** without inserted insole. **Fig. 1d** shows the bottom side of the shoe **100** and **Fig. 1e** an enlarged view of the medial toe region of the bottom side of the shoe **100. Fig. if** shows the heel region and **Fig. ig** the toe region of the shoe **100.** **Fig. 1h** shows a cross-section through the shoe **100** and **Fig. 1i** an enlarged view of the heel region of **Fig. 1h****.** Finally, **Fig. 1j** shows the shoe **100** in a top view with inserted insole **200** (see **Figs. 2a****-d).**

The shoe **100** may, for example, be used as a multifunctional outdoor shoe, in particular a mountain shoe, a mountain running shoe, a trail running shoe, a climbing shoe or an approach shoe. The shoe **100** comprises a shoe upper **110.**

As already explained, the shoe upper **110** may be provided such that the desired wearing comfort is achieved. The shoe upper **110** may, in particular, be breathable but at the same time impermeable to water and dirt and it may nestle against the foot of the wearer without the creation of uncomfortable pressure points. To this end, the shoe upper **110** may, for example, comprise a textile fabric from natural and / or synthetic materials, for example polyester, PET-polyester or polyamide. The material of the shoe upper **110** is preferably heat- and color stable in such a manner that during a manufacturing process (as, for example, more closely described below) it does not get discolored or loses its structure.

Connected to the shoe upper **110** is a textile two-dimensional region **120** which extends beneath the foot of the wearer of the shoe **100.** The shoe **100** further comprises an outsole unit **130** with a rubber material, wherein the two-dimensional region **120** is connected to the rubber material of the outsole unit **130** without a bonding agent.

As the outsole unit **130** is connected to the textile two-dimensional region **120,** which extends beneath the foot, instead of only at the rim of the sole, a resistant and durable connection between the outsole unit **130** and the shoe upper **110** connected to the textile two-dimensional region **120** results. By means of the textile design of the two-dimensional region **120,** the rubber material of the outsole unit **130** forms a matrix material with the two-dimensional region **120** during the manufacture, wherein a mechanical connection and / or a chemical connection can exist. Preferably, both a mechanical as well as a chemical connection exists, such that a particularly durable and resistant connection can be achieved.

In the shoe **100** shown here, the two-dimensional region **120** was connected to the outsole unit **130** by vulcanizing of the rubber material.

It is well possible that the outsole unit **130** comprises different rubber materials in different partial regions. For example, a particularly abrasion resistant rubber material at the rim of the sole may be combined with a rubber material providing particular good traction in regions in which the sole primarily contacts the ground, in order to avoid fast wear on the rims of the sole and at the same time avoid a slipping or sliding of the wearer. Or a particularly abrasion resistant rubber material in the forefoot region can be combined with a rubber material providing particular good traction in the heel region, in order to minimize the wear during push-off over the forefoot and during climbing and prevent a slipping when treading with the heel, and so forth. Rubber materials which are suited for this will be discussed in more detail further below.

As can, for example, be gathered from **Figs. 1c** and **1h****,** in the shoe **100,** the two-dimensional region **120** occupies almost the entire area, in any case more than 80% of the entire area, beneath the foot of the wearer, wherein in the present case the two-dimensional region **120** is provided as a Strobel sole.

It is, however, pointed out that within the scope of the invention the two-dimensional region **120** could also be a board lasted region, or the two-dimensional region **120** could comprises a moccasin construction together with the shoe upper **110,** or it may be glued to the shoe upper, and so forth.

In the present case, the entire two-dimensional region **120** is connected to the rubber material of the outsole unit **130.** This leads to a particularly close and durable connection of the outsole unit **130** with the two-dimensional region **120,** and hence to the desired stability and durability of the shoe **100.**

In case of the shoe **100,** also the shoe upper **110** is connected to the rubber material of the outsole unit **130** without a bonding agent, wherein in the present case the shoe upper **110** is connected to the outsole unit **130** by vulcanizing of the rubber material. Also here, a matrix material has formed from the vulcanized rubber material of the outsole unit **130** and the material of the shoe upper **110,** which in the present case also comprises a textile material, wherein on the one hand a mechanical connection can exist and on the other hand a chemical connection. Preferably, both a mechanical as well as a chemical connection exists. Reference is further made to the possibility that, for example, the outsole unit **130** and the two-dimensional region **120** are connected both mechanically and chemically, whereas the outsole unit **130** and the shoe upper **110** are only connected mechanically, and so forth.

This allows thin and very thin layers (for example < 2 mm, < 1.5 mm or < 1 mm) as well as thicker layers (> 2 mm, > 3 mm or > 5 mm) of the rubber material of the outsole unit **130** to be connected with the shoe upper **110** in a durable and abrasion resistant manner. Hence, the shoe upper **110** may, for example, be protected from the ingress of dirt and water by the rubber material of the outsole unit **130** without a significant increase in weight, for example in the region of the toes or at the rims of the foot. It is, however, also possible to connect thicker layers of the rubber material of the outsole unit **130** to the shoe upper **110,** like for example in the region of the toe cap **140** or the heel cap **148,** see below.

As can be gathered from **Figs. 1c** and **1h** and, in particular, the enlarged view in **Fig. 1i****,** the rubber material has permeated the two-dimensional region **120** at a plurality of positions **125,** leading to a mechanical connection of the two-dimensional region **120** with the rubber material of the outsole unit **130.** The same is true for the shoe upper **110,** even if this cannot be gathered from the figures so clearly.

In order to achieve the chemical connection of the rubber material with the shoe upper **110** or the two-dimensional region **120,** the rubber material can comprise one or more of the following materials: butyl-rubber, butadiene-rubber, natural rubber (caoutchouc), styrene-butadiene-rubber (SBR), nitrile-rubber (NBR), in particular nitrile rubber comprising one or more of the following materials in parts: ethylene-vinyl-acetate (EVA), lignosulfonate, silanes. In particular, NBR-based rubber materials, which comprise EVA, lignosulfonate and / or silanes in parts are well suited to enter into the desired chemical connection with the textile material of the two-dimensional region **120** and the shoe upper **110** during the vulcanizing. SBR-parts in rubber materials on the other hand mainly serve to increase the traction and the abrasion resistance of the vulcanized rubber material.

In the present case, the entire outsole unit **130** is integrally provided as a single piece. First, the outsole unit **130** comprises a base surface or tread surface **135.**

In addition, the outsole unit **130** comprises the following further elements: a toe cap **140,** a lateral side wing **142,** a medial side wing **145,** and a heel cap **148.** It is pointed out that in this context it is, in particular, possible to use different kinds of rubber for the different elements of the outsole unit **130** mentioned above, which may be specifically adjusted to the functionality of the respective elements. Furthermore, by the use of a rubber material for the outsole unit **130,** the toe cap **140** and the heel cap **148** can adapt to the specific anatomical conditions of the foot of each wearer, such that no blisters or pressure points are created.

In case of the shoe **100,** the heel cap **148** is, in particular, integrally provided as a single piece together with the outsole unit **130** in such a manner that the heel of the wearer of the shoe **100** leads to a stretching of the material of the heel cap **148** when the shoe **100** is donned, and by way of the restoring forces in the flexible rubber material of the heel cap **148** created in this manner the heel cap **148** nestles against the heel of the wearer and encloses it, such that the heel is well secured and stabilized.

For example, by use of a tailored last, for example a last **310** (see below), the heel cap **148** may be pre-shaped during the manufacture of the shoe **100** such that the stretching of the material of the heel cap **148** described above and hence the nestling effect of the heel cap **148** is achieved. To this end, the last may be narrower in the heel region than a conventional "standard last" for a shoe of the respective size. The use of such a narrower last during the manufacturing process also has the effect that the heel cap **148** already comprises a base stability even without inserted insole **200** (see below) or an additional heel part. The inserted insole **200** then further increases the stiffness of the heel region. As already mentioned, it is a big advantage of the slightly inward curved, pre-shaped heel cap **148** that it "nestles against" the heel when inserting the foot into the shoe **100** since the rubber material can be chosen very elastic.

Corresponding explanations may also apply to the toe cap **140.**

It is also an advantage of the shoe **100** that by the use of an insole **200** (see below) the stability and stiffness of the shoe **100** can be further increased or influenced. This fact, and the above described base stability of the heel cap **148** and / or the toe cap **140,** make it possible to do without additional reinforcement elements in the heel cap **148** and / or the toe cap **140,** such that this adaption- or nestling effect is not impaired.

Furthermore, the outsole unit **130** comprises multiple first profile elements **150** in the forefoot region which each comprise an indentation **155** in the direction towards the heel, and multiple second profile elements **160** in the heel region which each comprise an indentation **165** in the direction toward the toes. In particular, at the rim of the sole, the profile elements **150** and **160** form a kind of saw-tooth structure with teeth pointing in the backward direction and tilted surfaces pointing in the forward direction, as can be gathered from **Fig. id.** The design and arrangement of the profile elements **150** and **160** has the effect that during push-off over the forefoot region or when treading with the heel, they are anchored or engage with the ground and thus prevent a slipping of the foot.

If, for example, the wearer of the shoe **100** moves along rocks, the above mentioned saw-tooth structure does not impair movements of the wearer for movements in the forward direction, because in this direction the tilted surfaces of the saw-tooth structure are arranged. Should the wearer of the shoe **100,** however, move backwards or slip or fall, then the teeth of the saw-tooth structure pointing in the backward direction assume a "breaking function".

Furthermore, the outsole unit **130** comprises multiple third profile elements **170** in the medial toe region. The third profile elements **170** are arranged at the rim, more precisely at the medial forefoot rim, of the outsole unit **130,** and at this rim they each comprise a clearly defined edge **175.** These edges **175** can, for example, facilitate treading on small landings, ledges or steps in the rocks. As can be seen in **Fig. 1e****,** some of the third profile elements **170** comprise regions **178** slightly flattened in the direction towards the tip of the foot in the region of the edge **175.** They can facilitate twisting movements of the foot, for example on a small rock ledge or a small step in the rock, and prevent the third profile elements **170** getting caught up during such movements, in order to minimize the risk of falling.

Optionally, the shoe **100** further comprises a releasable insole **200.** As already mentioned, Fig. **1j** shows the shoe **100** with inserted insole **200.** In case of the shoe **100,** the insole **200,** in particular, serves the purpose to provide the shoe **100** with the desired cushioning and stability properties, which can hence be influenced and adjusted independently from the design of the outsole unit **130,** leading to a large degree of freedom for adjusting a shoe **100** to the wishes and requirements of the wearer.

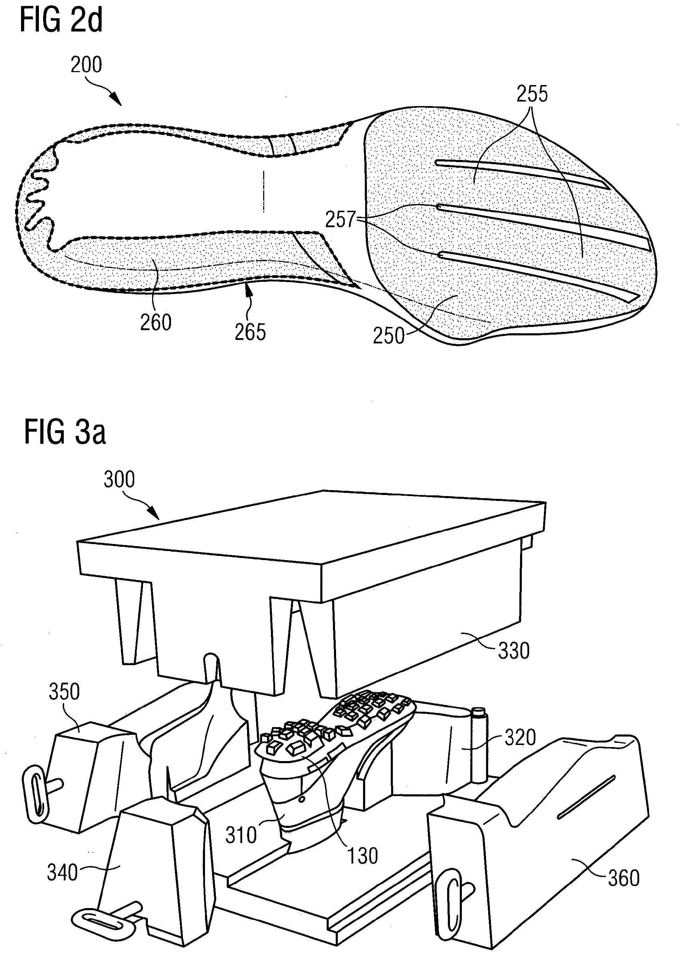

**Figs. 2a****-d** show such an insole **200,** as it may, for example, be used in combination with the embodiment of an inventive shoe **100** shown in **Figs. 1a****-j.** It is explicitly mentioned, however, that the insole **200** may also be used in combination with different embodiments of inventive shoes and even more generally with different shoes altogether. **Fig. 2a** shows the top side of the insole **200** facing towards the foot. **Fig. 2b** shows the medial and **Fig. 2c** the lateral side of the insole **200.** **Fig. 2d** shows the bottom side of the insole **200** facing away from the foot.

The insole **200** comprises a shell element **210** and a cushioning region **220,** wherein the shell element **210** comprises a larger deformation stiffness than the cushioning region **220.** In principle, the cushioning region **220** can, for example, comprise one or more of the following materials: (expanded) ethylene-vinyl-acetate, foamed ethylene-vinyl-acetate, (expanded) thermoplastic polyurethane, foamed polyurethane, (expanded) polypropylene, (expanded) polyamide, (expanded) polyetherblockamide, (expanded) polyoxymethylene, (expanded) polystyrene, (expanded) polyethylene, (expanded) polyoxyethylene, (expanded) ethylene-propylene-diene-monomer. The cushioning region **220** can, in particular, comprise randomly arranged particles, which may comprise one or more of the previously mentioned expanded materials. The particles may be connected to each other, for example by fusing of their surfaces.

In the present case, the cushioning region **220** consists of randomly arranged particles of expanded thermoplastic polyurethane, which are fused at their surfaces. The shell element **210** consists of EVA with a hardness of 55 shore C.

In another currently preferred embodiment (not shown), the insole consists of a shell element again from EVA with a hardness of 55 shore C, but the cushioning region consists of EVA with a hardness of 40 shore C.

However, different hardnesses (softer or harder) are also conceivable, respectively. For example, for the shell element hardnesses in the range from 45 shore C (very soft) - 70 shore C (very hard) are conceivable or values from individual subranges within this range, for example values in the range 45 - 55 shore C, 55 - 60 shore C or 60 - 70 shore C, and so forth.

For the cushioning region, on the other hand, also hardnesses in the range of 30 shore C (very soft) - 55 shore C (very hard) are conceivable, or values from individual subranges within this range, for example, values in the range of 30 - 40 shore C, 40 - 45 shore C or 45 - 55 shore C, and so forth.

The skilled person realizes that by a variation of the materials the insole may be influenced and adjusted as desired with respect to properties like cushioning and protection of the joints, energy loss / -return, stiffness, transfer of forces, feedback from the ground to the foot, and so forth.

The shell element **210** further comprises a reinforcement wing **242** in the lateral region of the toe joints and a reinforcement wing **245** in the medial region of the toe joints. These might, for example, correspond to the corresponding side wings **142** and **145** of the outsole unit **130** of the shoe **100** and provide the foot of the wearer with the required stability with respect to forces acting in a sideward direction (i.e. forces primarily acting on the foot in the medial-lateral direction). Depending on the size and shape of the reinforcement wings **242, 245** and / or of the side wings **142, 145,** the stability behavior of the shoe **100** or the insole **200** with respect to the impact of sideward forces can be influenced or controlled. In particular, the reinforcement wings **242, 245** can be provided with different heights, wherein they may both comprise the same height, in order to achieve, for example, a strong or not so strong reinforcement and / or stabilization. Furthermore, the reinforcement wing **245** on the medial side may have a different height / thickness / design than the reinforcement wing **242** on the lateral side, in order to selectively limit or influence / control sideward movements of the foot, for example in a preferred direction to the lateral side or to the medial side. In addition, the reinforcement wings **242, 245** may also be partially elastic, in order to provide the foot of the wearer with a defined freedom of movement.

The insole **200** further comprises a reinforcement foil **250** on its bottom side in the forefoot region. First, it is explicitly pointed out that it is also possible to use other planar materials like, for example, carbon, carbon-fibers or different textiles and fabrics alternatively or in addition to the reinforcement foil **250.** The reinforcement foil **250** may, for example, serves as a push-through protection, in order to avoid irritations of the foot and, in particular, the toes when treading caused by the profile elements **150** and / or **170** or stones / pointed objects lying beneath. In order to simultaneously not impair the freedom of movement in the forefoot region to an undesirable degree, the reinforcement foil **250** comprises a number of the individual fingers or sections **255,** which are separated from one another by recesses **257** in the reinforcement foil **250.** These recesses **257** hence act as flex zones in order to further influence and adjust the freedom of movement of the foot in the region of the reinforcement foil **250.** Instead of the elongated design of the flex zones **257** shown here, they may also be round, oval or rectangular or may comprise a different arbitrary shape.

The insole further comprises a reinforcement foil **260** in the heel region which extends into the midfoot region. Also here, it is possible to use different planar materials like, for example, carbon, carbon-fibers or different textiles and fabrics alternatively or in addition to the reinforcement foil **260,** and the reinforcement foil **260** can comprise flex zones as described above, too. For clarification, the dimensions of this reinforcement foil **260** are indicated by the dashed line **265** in **Fig. 2d****.** The reinforcement foil **260,** in particular, extends around the lower rim of the heel region and the midfoot region of the insole **200.** The reinforcement foils **250** and **260** may, for example, be a foil made from thermoplastic polyurethane with thickness of, for example, approximately 1 mm. It is, however, in particular also possible that the thickness or material composition of the reinforcement foil **250, 260** changes locally, in order to further increase the possibilities of taking influence on the flexibility- and elasticity properties of the insole **200.**

Furthermore, both the reinforcement foil **250** as well as the reinforcement foil **260** may contribute to increasing the stiffness of the insole **200.**

Conceivable materials for the reinforcement foils **250, 260** comprise thermoplastic polyurethane, polypropylene, polyethylene, polyamide and in principle all thermoplastic materials which can be extruded as a foil.

It is further also possible that the insole **200** comprises further functional elements like a heel support, a (separate) midfoot support or a recess for an electronic component (all of which are not shown here).

The insole **200** comprises dimensions which lead to a stretching of the shoe upper **110** when the insole **200** is inserted into the interior of the shoe upper **110** of the shoe **100,** such that the insole **200** is secured within the shoe upper **110** without additional securing devices or securing measures by means of the created restoring forces.

It is, however, pointed out that other possibilities and solutions for securing the insole **200** in the shoe upper **110** can also be considered, for example a connection by means of a hook and loop fastener or by means of the insole **200** being hooked into the shoe upper at certain places, and so forth.

**Figs. 3a****-b** show a molding arrangement **300** which may be used for performing an embodiment of an inventive method for the manufacture of an inventive shoe, for example the shoe **100** with outsole unit **130.**

Such a method comprises a positioning of a mounting **310** in the molding arrangement **300,** wherein a shoe upper, for example shoe upper **110,** and a textile two-dimensional region connected to the shoe upper, for example two-dimensional region **120,** which extends beneath the foot of the wearer of the shoe, are arranged on the mounting **310.**

The mounting **310** may, for example, be a heat resistant last **310** made from metal, for example from aluminum and / or steel, which withstands the temperatures occurring during manufacture. On this last, the shoe upper with the textile two-dimensional region may be pulled on.

Subsequently, at least one sole material, which comprises a rubber material, is positioned in at least one recess in the molding arrangement **300** and / or on the shoe upper and / or on the two-dimensional region, the molding arrangement **300** is closed, and the rubber material is connected to the two-dimensional region without the use of a bonding agent.

This connecting can, in particular, proceed by vulcanizing of the rubber material under the influence of pressure and / or under the provision or heat for the creation of an outsole unit, or example the outsole unit **130** of the shoe **100.**

During the connecting, in particular during the vulcanizing, also the profile elements **150, 160** and **170** as well as different contours of the outsole unit **130** may form by means of the sole material filling corresponding mold contours within the molding arrangement **300.**

The following conditions / parameters have turned out advantageous for the vulcanization process:
- A temperature in the closed molding arrangement **300** of 150°C - 200°C, preferably of 160°C - 190°C, and particularly preferably of 165°C - 175°C;
- A closing force of the molding arrangement **300** of 100 kg - 200 kg, preferably of 140 kg - 160 kg, and particularly preferably of 145 kg - 155 kg; and
- A duration of the vulcanization process of 5 min - 15 min, preferably of 6 min - 10 min, and particularly preferably of 8 min.

However, also manufacturing parameters in different ranges or intervals are conceivable, for example temperatures in the closed molding arrangement **300** in the region of 150°C - 160°C, 160°C - 170°C, 170°C - 180°C, 180°C - 190°C, 190°C - 200°C, or even higher or lower temperatures, closing forces in the range 100 kg - 110 kg, 110 kg - 120 kg, 120 kg - 130 kg, ... , 190 kg - 200 kg or even higher or lower closing forces as well as a duration of the vulcanization process in the range of, for example, 5 min - 8 min, 8 min - 12 min, 12 min - 15 min or even longer or shorter process durations.

The molding arrangement **300** shown in **Figs. 3a****-b** comprises a plurality of movable mold parts **330, 340, 350** and **360,** as well as a fixed baseplate **320.** The movable mold parts are a top plate **330,** a heel slider **340,** a medial slider **350** and lateral slider **360.** After closing of the molding arrangement **300,** the baseplate **320** and the movable mold parts **330, 340, 350, 360** form an essentially closed molding space, in which the mounting **310** with the shoe upper and the textile two-dimensional region connected therewith are arranged. A molding space is to be understood as essentially closed if the molding space does not allow an escape of the rubber material during the connecting / vulcanization apart from potential manufacturing seams / protrusions which cannot be avoided.

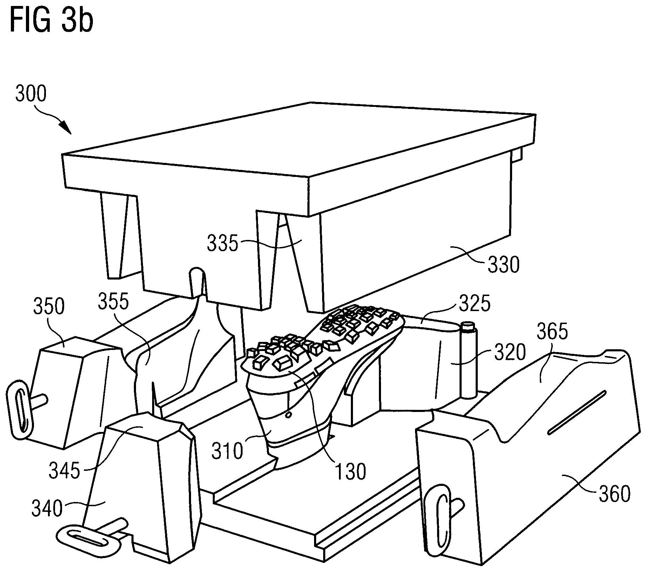

As can be gathered from **Fig. 3b****,** prior to the closing of the molding arrangement **300,** a two-dimensional piece of the sole material **325, 335, 345, 355, 365** can be positioned in the movable mold parts **330, 340, 350, 360** (or some of them), but also on the baseplate **320,** in a respective recess of the mold part **330, 340, 350, 360** or the baseplate **320.** It is also possible to place such a two-dimensional piece of material directly on the two-dimensional region and / or the shoe upper arranged on the mounting **310.**

For example, for the manufacture of the shoe **100,** a two-dimensional piece **335** of a rubber material is positioned either on the two-dimensional region mounted on the last **310** or in a recess in the top plate **330,** which in its shape approximately corresponds to the foot of the later wearer and (among other things) will form the bottom side of the outsole unit **130.** Potentially, further pieces, strips or cubes of the rubber material are placed onto this two-dimensional piece **335,** if this is necessary to provide enough base material in the respective regions for the manufacture of the tread surface / profile elements / heel cap / toe cap, and so forth. In a recess of the baseplate **320,** a two-dimensional piece **325** of a rubber material is inserted, which will form (among other things) the toe cap **140** after the manufacture. In a recess of the heel slider **340,** a two-dimensional piece **345** of a rubber material is inserted, which will form (among other things) the heel cap **148** after the manufacture. In respective recesses of the medial and lateral slider **350, 360,** a two-dimensional piece **355, 365** of a rubber material is inserted each, which will form (among other things) the sidewalls of the outsole unit **130** after the manufacture.

It is to be noted that the two-dimensional pieces **325, 335, 345, 355** and **365** may well comprise different rubber mixtures / materials, in order to locally adjust the properties of the outsole unit **130** being manufactured to the wishes and requirements in this way.

For example, a particularly abrasion resistant rubber material at the rim of the sole can be combined with a rubber material providing particular good traction in regions in which the sole primarily contacts the ground, in order to avoid a fast wear of the rims of the sole and to improve the traction at the rim of the sole and at the same time prevent a slipping or sliding of the wearer. Or a particularly abrasion resistant rubber material in the forefoot region can be combined with a rubber material providing particular good traction in the heel region, in order to minimize the abrasion during push-off over the forefoot and during climbing and to prevent a slipping when treading with the heel. Additionally, in partial regions of the outsole unit a partially or completely vulcanized rubber may be used in a mix with unvulcanized rubber. These are merely some possible examples of how to combine different rubber materials, and further possibilities are conceivable to the skilled person.

It is also pointed out that it is in principle possible that not only caoutchouc-based materials are used as rubber materials. A different material can also be used, which after conclusion of the manufacturing process comprises properties which are similar or equal to those of vulcanized rubber, in particular similar properties with regard to the abrasion resistance, elasticity and traction on different grounds. The rubber materials / mixtures may hence also be thermo-formable plastics or something similar.

Finally, it is mentioned that such a manufacturing method may allow providing shoes which are very hard or impossible to manufacture with a conventional gluing method. If, for example, an outsole unit is designed as a single integral piece together with a toe cap and a heel cap and shall be glued to a shoe upper, the shoe upper would initially have to be "crumpled together" in order to be inserted into the undercuts of the toe / heel cap and subsequently be "folded out" again there. The glue used for a gluing of rubber, however, is highly adhesive such that the shoe upper would probably come into contact with the glue and stick to the outsole unit in places where this is not intended.

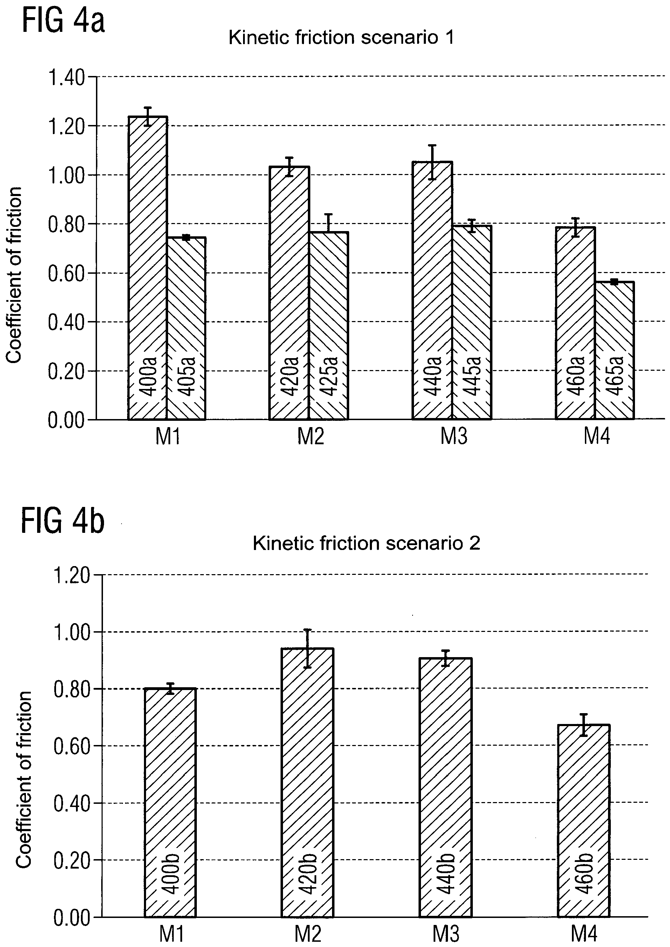

Finally, **Figs. 4a****-d** show results of measurements which were undertaken by applicant in order to investigate the traction of different vulcanized rubber materials under conditions which are typically encountered in different outdoor situations and activities.

To this end, a respective material sample was fixed to a stamping element and pushed onto different substrates (rough or smooth, wet or dry) with a certain contact force. The contact area was approximately 4 cm² in each case. The substrate was then pulled out from beneath the material sample and the acting horizontal friction forces were recorded by the device. It was possible to measure the static friction but also the dynamic kinetic friction during the sliding phase of the substrate. For determining the kinetic friction, the first and the last 20 mm of the sliding track where excluded from the determination in each case. The friction forces continually recorded during the sliding phase were then averaged over the relevant sliding phase in order to obtain an averaged value for the kinetic friction.

Both for the determination of the static friction as well as the kinetic friction the average was finally taken over all test runs performed for given scenario, in order to obtain a final averaged value. These final averaged values are shown in **Figs. 4a****-d** (together with the standard deviations resulting from the measurements). In each case, the coefficient of static or kinetic friction is plotted on the Y-axis, i.e. the ratio of normal force (contact force) and the friction force, wherein the values were normalized to measurements on a standardized surface.

The following **Table 1** summarizes the measurement conditions / scenarios underlying the results shown in **Figs. 4a****-d.**

**Table 1**

| **Scenario** | **scenario 1** | **scenario 2** | **scenario 3** |
|---|---|---|---|
| Contact force | 60 N | 50 N | 420 N |
| Contact pressure | 15 N / cm² | 12.5 N / cm² | 105 N / cm² |
| Substrate | R13 Stone | R10 Stone | R13 Stone |
| Sliding velocity of the substrate | 50 mm / s | 50 mm / s | 10 mm / s |
| Length of the sliding track | 200 mm | 200 mm | 100 mm |

R13 or R10 designate the norm numbers according to DIN 51130, which describe the slip resistance of the respective substrate.

In each case, four vulcanized rubber materials were measured which are designated as "materials M1, M2, M3 and M4" in **Figs. 4a****-d.** The following **Table 2** lists the properties of these materials:

**Table 2:**

| **Material** | **Hardness as tested** | **Elasticity** |
|---|---|---|
| M1 | 61 shore A | 27 % |
| M2 | 73 shore A | 21 % |
| M3 | 81 shore A | 14 % |
| M4 | 78 shore A | 51 % |

The results presented in **Figs. 4a****-d** corresponds to the rubber materials M1, M2, M3 and M4 from left to right in all four figures.

**Fig. 4a** shows the coefficients of kinetic friction for **scenario 1.** The measurement values **400a, 420a, 440a** and **460a** were determined on dry substrate, the measurement values **405a, 425a, 445a** and **465a** on wet substrate.

**Fig. 4b** shows the coefficients of kinetic friction **400b, 420b, 440b** and **460b** for **scenario 2** which were determined on wet substrate.

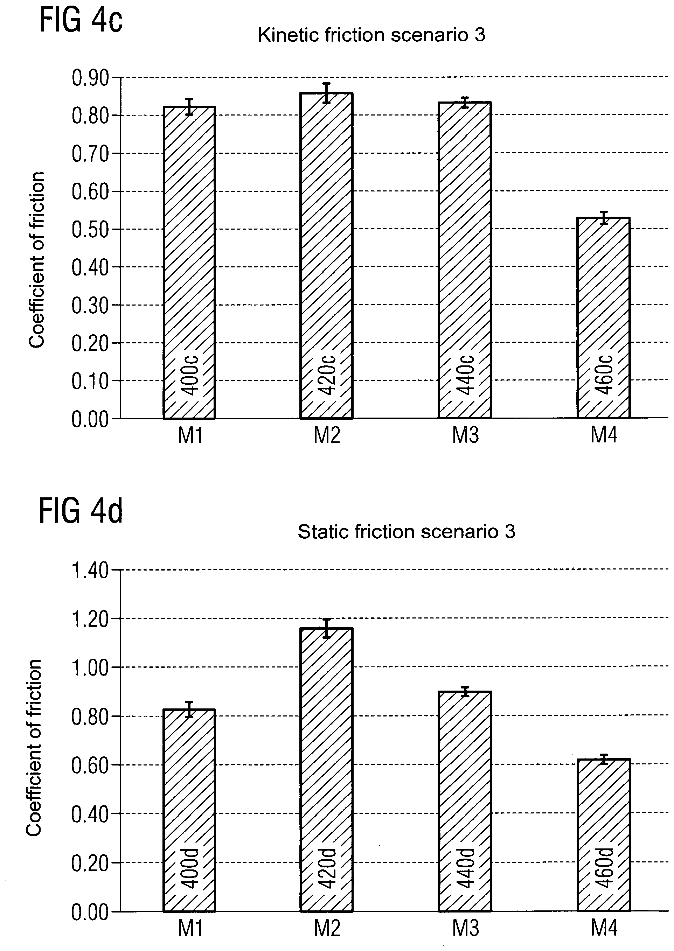

**Fig. 4c** shows the coefficients of kinetic friction **400c, 420c, 440c** and **460c** for **scenario 3** determined on dry substrate, and **Fig. 4d** the coefficients of static friction **400d, 420d, 440d** and **460d** for **scenario 3,** also determined on dry substrate.

From the measurement results, the following conclusions may be drawn with regard to the rubber materials tested by applicant: in **scenario 1,** the material M1 shows a 20% higher kinetic friction on dry substrate than materials M2 and M3. On wet substrate, the differences were smaller. In **scenario 3** on dry substrate, material M3 performed best with a 38% higher coefficient of static friction than material M1. In **scenario 2** on wet substrate, the material M3 had a 19% higher coefficient of kinetic friction than material M1.

Finally, further investigations showed that the rubber materials M1 - M4 discussed here on average comprise a 52% improved traction compared to conventional abrasion resistant rubber materials.

To summarize, the investigated rubber materials comprise very good traction values and can hence advantageously be employed for use in an outsole unit of an inventive shoe, for example in the outsole unit **130** of the shoe **100.** The investigations have also shown in an exemplary manner how different rubber materials perform under different conditions and the skilled person will therefore understand how the properties of an inventive shoe can be adapted to the respective requirements and to the conditions typically occurring in the context of a certain activity through a suitable choice of the rubber material or different rubber materials for different regions of the outsole unit.

## Claims

1. Outdoor shoe (100), in particular mountain shoe, mountain running shoe, trail running shoe or climbing shoe, comprising:
a. a shoe upper (110);
b. a textile two-dimensional region (120) connected to the shoe upper (110) which extends beneath a foot of a wearer of the outdoor shoe (100); and
c. an outsole unit (130) with a rubber material, wherein
d. the two-dimensional region (120) has been connected to the rubber material of the outsole unit (130) without a bonding agent by vulcanizing of the rubber material, wherein the rubber material has at least partially permeated the two-dimensional region (120) and thus lead to a mechanical connection, and wherein
e. the outsole unit (130) is integrally provided as a single piece and in addition to a tread surface (135) comprises one or more of the following elements: a toe cap (140), a lateral side wing (142), a medial side wing (145), a heel cap (148).

2. Outdoor shoe (100) according to claim 1, wherein also the shoe upper (110) has been connected to the rubber material of the outsole unit (130) without a bonding agent by vulcanizing of the rubber material.

3. Outdoor shoe (100) according to claim 2, wherein the rubber material has also at least partially permeated the shoe upper (110) and thus lead to a mechanical connection.

4. Outdoor shoe (100) according to any one of the preceding claims, wherein the two-dimensional region (120) and / or the shoe upper (110) is also chemically connected to the outsole unit (130).

5. Outdoor shoe (100) according to any one of the preceding claims, wherein the heel cap (148) is integrally provided as a single piece together with the outsole unit (130) in such a manner that the heel of a wearer leads to a stretching of the material of the heel cap (148), such that the heel cap (148) nestles against the heel of the wearer.

6. Outdoor shoe (100) according to any one of the preceding claims, wherein the outsole unit (130) further comprises one or more first profile elements (150) in the forefoot region that each comprise an indentation (155) in the direction of the heel and / or comprises one or more second profile elements (160) in the heel region that each comprise an indentation (165) in the direction of the toes.

7. Outdoor shoe (100) according to any one of the preceding claims, wherein the outsole unit (130) further comprises one or more third profile elements (170), wherein the third profile elements (170) are arranged at a rim of the outsole unit (130) and each comprise a clearly defined edge at the rim.

8. Outdoor shoe (100) according to any one of the preceding claims, wherein the outdoor shoe (100) further comprises a releasable insole (200), wherein the insole (200) comprises a shell element (210) and a cushioning region (220), and wherein the shell element (210) comprises a larger deformation stiffness than the cushioning region (220).

9. Outdoor shoe (100) according to the preceding claim 8, wherein the shell element (210) comprises reinforcement wings (245; 242) in the medial and lateral region of the toe joints.

10. Outdoor shoe (100) according to any one of the preceding claims, wherein the rubber material comprises one or more of the following materials: butyl-rubber, butadiene-rubber, natural rubber, styrene-butadiene-rubber, nitrile-rubber, in particular nitrile-rubber comprising one or more of the following materials in parts: ethylene-vinyl-acetate, lignosulfonate, silanes.

11. Method for the manufacture of an outdoor shoe (100), in particular mountain shoe, mountain running shoe, trail running shoe or climbing shoe, comprising the following steps:
a. positioning of a mounting (310) in a molding arrangement (300), wherein a shoe upper (110) and a textile two-dimensional region (120) connected to the shoe upper (110) which extends beneath a foot of a wearer of the outdoor shoe (100) are arranged on the mounting (310);
b. positioning of at least one sole material (325; 335; 345; 355; 365) comprising a rubber material in at least one recess in the molding arrangement (300) and / or on the shoe upper (110) and / or on the two-dimensional region (120);
c. closing of the molding arrangement (300); and
d. connecting of the rubber material to the two-dimensional region (120) without the use of a bonding agent, wherein
e. step d. comprises a vulcanizing of the rubber material under pressure and / or under the provision of heat for the creation of an outsole unit (130), such that
f. the rubber material at least partially permeates the two-dimensional region (120) and thus leads to a mechanical connection, and such that
g. the outsole unit (130) is integrally provided as a single piece and in addition to a tread surface (135) comprises one or more of the following elements: a toe cap (140), a lateral side wing (142), a medial side wing (145), a heel cap (148).

12. Method according to claim 11, wherein the vulcanizing in step d. is performed under the following conditions:
- a temperature in the closed molding arrangement (300) of 150°C - 200°C, preferably of 160°C - 190°C, and particularly preferably of 165°C - 175°C;
- a closing force of the molding arrangement (300) of 100 kg - 200 kg, preferably of 140 kg - 160 kg, and particularly preferably of 145 kg - 155 kg;
- a duration of the vulcanization process of 5 min - 15 min, preferably of 6 min - 10 min, and particularly preferably of 8 min.

## Patentansprüche

1. Outdoor-Schuh (100), insbesondere Bergschuh, Berglaufschuh, Trailrunning-Schuh oder Kletterschuh, umfassend:
a. ein Schuhoberteil (110);
b. einen textilen zweidimensionalen Bereich (120), der mit dem Schuhoberteil (110) verbunden ist und der sich unterhalb eines Fußes eines Trägers des Outdoor-Schuhs (100) erstreckt; und
c. eine Außensohleneinheit (130) mit einem Gummimaterial, wobei
d. der zweidimensionale Bereich (120) mit dem Gummimaterial der Außensohleneinheit (130) ohne ein Klebemittel durch Vulkanisieren des Gummimaterials verbunden worden ist, wobei das Gummimaterial den zweidimensionalen Bereich (120) zumindest teilweise durchdrungen hat und so zu einer mechanischen Verbindung geführt hat, und wobei
e. die Außensohleneinheit (130) einstückig ausgebildet ist und zusätzlich zu einer Lauffläche (135) eines oder mehrere der folgenden Elemente umfasst: eine Zehenkappe (140), einen lateralen Seitenflügel (142), einen medialen Seitenflügel (145), eine Fersenkappe (148).

2. Outdoor-Schuh (100) nach Anspruch 1, wobei auch das Schuhoberteil (110) mit dem Gummimaterial der Außensohleneinheit (130) ohne ein Klebemittel durch Vulkanisieren des Gummimaterials verbunden worden ist.

3. Outdoor-Schuh (100) nach Anspruch 2, wobei das Gummimaterial auch das Schuhoberteil (110) zumindest teilweise durchdrungen hat und so zu einer mechanischen Verbindung geführt hat.

4. Outdoor-Schuh (100) nach irgendeinem der vorhergehenden Ansprüche, wobei der zweidimensionale Bereich (120) und / oder das Schuhoberteil (110) auch chemisch mit der Außensohleneinheit (130) verbunden sind.

5. Outdoor-Schuh (100) nach irgendeinem der vorhergehenden Ansprüche, wobei die Fersenkappe (148) zusammen mit der Außensohleneinheit (130) einstückig so ausgebildet ist, dass die Ferse eines Trägers zu einer Dehnung des Materials der Fersenkappe (148) führt, sodass die Fersenkappe (148) sich der Ferse des Trägers anschmiegt.

6. Outdoor-Schuh (100) nach irgendeinem der vorhergehenden Ansprüche, wobei die Außensohleneinheit (130) ferner ein oder mehrere erste Profilelemente (150) im Vorderfußbereich umfasst, welche jeweils eine Einbuchtung (155) in Richtung der Ferse aufweisen, und / oder ein oder mehrere zweite Profilelemente (160) im Fersenbereich umfasst, welche jeweils eine Einbuchtung (165) in Richtung der Zehen aufweisen.

7. Outdoor-Schuh (100) nach irgendeinem der vorhergehenden Ansprüche, wobei die Außensohleneinheit (130) ferner ein oder mehrere dritte Profilelemente (170) umfasst, wobei die dritten Profilelemente (170) an einem Rand der Außensohleneinheit (130) angeordnet sind und an dem Rand jeweils eine klar definierte Kante aufweisen.

8. Outdoor-Schuh (100) nach irgendeinem der vorhergehenden Ansprüche, wobei der Outdoor-Schuh (100) ferner eine herausnehmbare Innensohle (200) umfasst, wobei die Innensohle (200) ein Schalenelement (210) und einen Dämpfungsbereich (220) umfasst, und wobei das Schalenelement (210) eine größere Deformationssteifigkeit aufweist als der Dämpfungsbereich (220).

9. Outdoor-Schuh (100) nach dem vorhergehenden Anspruch 8, wobei das Schalenelement (210) Verstärkungsflügel (245; 242) im medialen und lateralen Bereich der Zehengelenke umfasst.

10. Outdoor-Schuh (100) nach irgendeinem der vorhergehenden Ansprüche, wobei das Gummimaterial eines oder mehrere der folgenden Materialien umfasst: Butyl-Kautschuk, Butadien-Kautschuk, Naturkautschuk, Styrol-Butadien-Kautschuk, Nitrilkautschuk, insbesondere Nitrilkautschuk, welcher eines oder mehrere der folgenden Materialien anteilig beinhaltet: Ethylen-Vinyl-Acetat, Ligninsulfonat, Silane.

11. Verfahren zur Herstellung eines Outdoor-Schuhs (100), insbesondere eines Bergschuhs, Berglaufschuhs, Trailrunning-Schuhs oder Kletterschuhs, die folgenden Schritte umfassend:
a. Positionieren einer Halterung (310) in einer Formanordnung (300), wobei auf der Halterung (310) ein Schuhoberteil (110) und ein textiler zweidimensionaler Bereich (120), der mit dem Schuhoberteil (110) verbunden ist und sich unterhalb eines Fußes eines Trägers des Outdoor-Schuhs (100) erstreckt, angeordnet sind;
b. Positionieren zumindest eines Sohlenmaterials (325; 335; 345; 355; 365), welches ein Gummimaterial umfasst, in zumindest einer Aufnahme in der Formanordnung (300) und / oder auf dem Schuhoberteil (110) und / oder auf dem zweidimensionalen Bereich (120);
c. Schließen der Formanordnung (300); und
d. Verbinden des Gummimaterials mit dem zweidimensionalen Bereich (120) ohne die Verwendung eines Klebemittels wobei
e. Schritt d. ein Vulkanisieren des Gummimaterials unter Druck und / oder unter Zuführung von Wärme zur Erzeugung einer Außensohleneinheit (130) umfasst, sodass
f. das Gummimaterial den zweidimensionalen Bereich (120) zumindest teilweise durchdringt und so zu einer mechanischen Verbindung führt, und sodass
g. die Außensohleneinheit (130) einstückig ausgebildet wird und zusätzlich zu einer Lauffläche (135) eines oder mehrere der folgenden Elemente umfasst: eine Zehenkappe (140), einen lateralen Seitenflügel (142), einen medialen Seitenflügel (145), eine Fersenkappe (148).

12. Verfahren nach Anspruch 11, wobei das Vulkanisieren im Schritt d. unter den folgenden Bedingungen erfolgt:
- eine Temperatur in der geschlossenen Formanordnung (300) von 150 °C bis 200 °C, bevorzugt von 160 °C bis 190 °C und besonders bevorzugt von 165 °C bis 175 °C;
- eine Verschlusskraft der Formanordnung (300) von 100 kg bis 200 kg, bevorzugt von 140 kg bis 160 kg und besonders bevorzugt von 145 kg bis 155 kg;
- eine Dauer des Vulkanisierungsprozesses von 5 min bis 15 min, bevorzugt von 6 min bis 10 min und besonders bevorzugt von 8 min.

## Revendications

1. Chaussure d'extérieur (100), en particulier chaussure de montagne, chaussure de course en montagne, chaussure de course de trail ou chaussure d'escalade, comprenant :
a. une tige de chaussure (110) ;
b. une région bidimensionnelle textile (120) solidarisée à la tige de chaussure (110) et qui s'étend au-dessous d'un pied d'un porteur de la chaussure d'extérieur (100) ; et
c. une unité de semelle externe (130) avec un matériau caoutchouteux, dans laquelle
d. la région bidimensionnelle (120) a été solidarisée au matériau caoutchouteux de l'unité de semelle externe (130) sans agent de liaison, par vulcanisation du matériau caoutchouteux, le matériau caoutchouteux ayant au moins partiellement infiltré la région bidimensionnelle (120) en réalisant ainsi une solidarisation mécanique, et dans laquelle
e. l'unité de semelle extérieure (130) est réalisée entièrement d'une seule pièce, et outre une surface de marche (135) comprend un ou plusieurs éléments suivants : un bout dur (140), un flanc côté latéral (142), un flanc côté médian (145), un contrefort (148).

2. Chaussure d'extérieur (100) selon la revendication 1, dans laquelle la tige de chaussure (110) a été également solidarisée au matériau caoutchouteux de l'unité de semelle extérieure (130) sans agent de liaison par vulcanisation du matériau caoutchouteux.

3. Chaussure d'extérieur (100) selon la revendication 2, dans laquelle le matériau caoutchouteux a également au moins partiellement infiltré la tige de chaussure (110) et a ainsi réalisé une liaison mécanique.

4. Chaussure d'extérieur (100) selon l'une des revendications précédentes, dans laquelle la région bidimensionnelle (120) et/ou la tige de chaussure (110) est également solidarisée chimiquement à l'unité de semelle extérieure (130).

5. Chaussure d'extérieur (100) selon l'une des revendications précédentes, dans laquelle le contrefort (148) est réalisé entièrement d'une seule pièce avec l'unité de semelle extérieure (130) d'une manière telle que le talon d'un porteur produise un étirement du matériau du contrefort (148), de sorte que le contrefort (148) vienne emboîter le talon du porteur.

6. Chaussure d'extérieur (100) selon l'une des revendications précédentes, dans laquelle l'unité de semelle extérieure (130) comprend également dans la région de l'avant-pied un ou plusieurs premiers éléments de profil (150) qui comprennent chacun une encoche (155) dans la direction du talon, et/ou comprend dans la région du talon un ou plusieurs seconds éléments de profil (160) qui comprennent chacun une encoche (160) dans la direction des orteils.

7. Chaussure d'extérieur (100) selon l'une des revendications précédentes, dans laquelle l'unité de semelle extérieure (130) comprend en outre un ou plusieurs troisièmes éléments de profil (170), les troisièmes éléments de profil (170) étant agencés au niveau d'un rebord de l'unité de semelle extérieure (130) et comprenant chacun un bord clairement défini au niveau du rebord.

8. Chaussure d'extérieur (100) selon l'une des revendications précédentes, dans laquelle la chaussure d'extérieur (100) comprend en outre une semelle intérieure amovible (200), la semelle intérieure (200) comprenant un élément enveloppe (210) et une région amortissante (220), et l'élément enveloppe (210) présentant une raideur à la déformation plus importante que la région amortissante (220).

9. Chaussure d'extérieur (100) selon la revendication 8 précédente, dans laquelle l'élément enveloppe (210) comprend des flancs de renfort (245 ; 242) dans la région médiane et latérale des articulations des orteils.

10. Chaussure d'extérieur (100) selon l'une des revendications précédentes, dans laquelle le matériau caoutchouteux comprend un ou plusieurs des matériaux suivants : caoutchouc butyle, caoutchouc butadiène, caoutchouc naturel, caoutchouc butadiène-styrène, caoutchouc nitrile, en particulier caoutchouc nitrile comprenant en parties un ou plusieurs des matériaux suivants : acétate d'éthylène-vinyle, lignosulfonate, silanes.

11. Procédé de fabrication d'une chaussure d'extérieur (100), en particulier d'une chaussure de montagne, d'une chaussure de course en montagne, d'une chaussure de course de trail ou d'une chaussure d'escalade, comprenant les étapes suivantes :
a. positionnement d'un assemblage (310) dans un appareil de moulage (300), dans lequel sont agencées sur l'assemblage (310) une tige de chaussure (110) et une région bidimensionnelle textile, (120) solidarisée à la tige de chaussure (110) et qui s'étend au-dessous d'un pied d'un porteur de la chaussure d'extérieur (100), ;
b. positionnement d'au moins un matériau de semelle (325 ; 335 ; 345 ; 355 ; 365) comprenant un matériau caoutchouteux dans au moins un évidement de l'appareil de moulage (300) et/ou sur la tige de chaussure (110) et/ou sur la région bidimensionnelle (120) ;
c. fermeture de l'appareil de moulage (300) ; et
d. solidarisation du matériau caoutchouteux à la région bidimensionnelle (120) sans utilisation d'agent de liaison, dans lequel
e. l'étape d. comprend une vulcanisation du matériau caoutchouteux sous pression et/ou sous apport de chaleur pour la création d'une unité de semelle extérieure (130), de telle sorte que
f. le matériau caoutchouteux infiltre au moins partiellement la région bidimensionnelle (120) et réalise ainsi une solidarisation mécanique, et de telle sorte que
g. l'unité de semelle extérieure (130) soit réalisée entièrement d'une seule pièce et qu'en outre une surface d'usure (135) inclue un ou plusieurs des éléments suivants : un bout dur (140), un flanc côté latéral (142), un flanc côté médian (145), un contrefort (148).

12. Procédé selon la revendication 11, dans lequel la vulcanisation de l'étape d. est opérée dans les conditions suivantes :
- une température dans l'appareil de moulage fermé (300) comprise entre 150°C et 200°C, de préférence entre 160°C et 190°C, et de façon particulièrement préférée entre 165°C et 175°C ;
- une force de fermeture de l'appareil de moulage (300) comprise entre 100 kg et 200 kg, de préférence entre 140 kg et 160 kg, et de façon particulièrement préférée entre 145 kg et 155 kg ;
- une durée du processus de vulcanisation comprise entre 5 min et 15 min, de préférence entre 6 min et 10 min, et de façon particulièrement préférée de 8 min.
